(19)

Europäisches
Patentamt
European
Patent Office
Office européen
des brevets

(11) **EP 4 187 630 A1**

(12) **EUROPEAN PATENT APPLICATION**

(43) Date of publication:
**31.05.2023 Bulletin 2023/22**

(21) Application number: **22209300.7**

(22) Date of filing: **24.11.2022**

(51) International Patent Classification (IPC):
***H01M 4/04*** (2006.01)        ***H01M 4/36*** (2006.01)
***H01M 10/0525*** (2010.01)

(52) Cooperative Patent Classification (CPC):
**H01M 4/0435; H01M 4/366; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 KR 20210164546**
                **16.05.2022 KR 20220059658**

(71) Applicant: **SK On Co., Ltd.**
**Seoul 03161 (KR)**

(72) Inventors:
• **KANG, Min Gu**
  **34124 Daejeon (KR)**
• **LEE, Sang Han**
  **34124 Daejeon (KR)**
• **CHO, Yong Hyun**
  **34124 Daejeon (KR)**

(74) Representative: **Prüfer & Partner mbB**
**Patentanwälte · Rechtsanwälte**
**Sohnckestraße 12**
**81479 München (DE)**

(54) **CATHODE FOR LITHIUM SECONDARY BATTERY AND LITHIUM SECONDARY BATTERY INCLUDING THE SAME**

(57)    A cathode for a lithium secondary battery is provided. The cathode for a lithium secondary battery includes a current collector, and a first cathode active material layer formed by being pressed on at least one surface of the current collector. The first cathode active material layer includes first lithium-transition metal composite oxide particles. A pressed ratio of the current collector is 25% or less, and an electrode density is 3.4 g/cc or more.

FIG. 1

(a)

EP 4 187 630 A1

**Description**

BACKGROUND

1. Field

The present invention relates to a cathode for a lithium secondary battery and a lithium secondary battery including the same. More particularly, the present invention relates to a cathode for a lithium secondary battery including lithium-transition metal composite oxide particles and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile such as a hybrid vehicle.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal oxide is used as a cathode active material of the lithium secondary battery which may have preferably properties for high capacity, high power and enhanced life-span. However, when the lithium metal oxide is designed to have a high density for high power and high capacity, thermal and mechanical stability may be deteriorated, and thus life-span property and operational reliability of the lithium secondary battery may be deteriorated.

For example, Korean Published Patent Application No. 10-2017-0093085 discloses a cathode active material including a transition metal compound and an ion adsorption binder, which may not provide sufficient life-span and stability.

SUMMARY

According to an aspect of the present invention, there is provided a cathode for a lithium secondary battery having improved operational stability and reliability.

According to an aspect of the present invention, there is a lithium secondary battery including a cathode for a lithium secondary battery having improved operational stability and reliability.

A cathode for a lithium secondary battery includes a current collector, and a first cathode active material layer formed by being pressed on at least one surface of the current collector. The first cathode active material layer includes first lithium-transition metal composite oxide particles. A pressed ratio of the current collector represented by Equation 1 is 25% or less, and an electrode density is 3.4 g/cc or more:

[Equation 1]

$$S(\%) = \{(T1-T2)/T1\}*100$$

In Equation 1, S is the pressed ratio of the current collector (%), T1 is an initial thickness ($\mu$m) of the current collector, and T2 is a thickness ($\mu$m) of the current collector after a pressing.

In some embodiments, a pressure of the pressing may be in a range from 5 tons to 10 tons based on a linear pressure.

In some embodiments, the thickness of the current collector after the pressing may be defined as an average value of thicknesses measured at 20 to 30 points when a cathode cross-section of a 200 $\mu$m-length region in a longitudinal direction of the current collector is photographed by a scanning electron microscope (SEM) after the pressing.

In some embodiments, an average particle diameter (D50) of the first lithium-transition metal composite oxide particles may be in a range from 2 $\mu$m to 17 $\mu$m.

In some embodiments, the current collector may have an initial thickness in a range from 8 $\mu$m to 12 $\mu$m.

In some embodiments, the first lithium-transition metal composite oxide particles may include first particles having a single particle shape and second particles having a secondary particle shape. A content of the first particles may be 10 wt% or more based on a total weight of the first lithium-transition metal composite oxide particles.

In some embodiments, the first particles may include particles of a monolithic form in which 2 to 10 single particles are attached or adhered to each other.

In some embodiments, the first lithium-transition metal composite oxide particles may contain nickel and is represented by Chemical Formula 1:

[Chemical Formula 1] $\quad\quad Li_aNi_xM_{1-x}O_{2+y}$

In Chemical Formula 1, $0.9 \le a \le 1.5$, $0.6 \le x \le 0.99$, $-0.1 \le y \le 0.1$, M includes at least one element selected from Na, Mg, Ca, Y, Ti, Hf, V, Nb, Ta, Cr, Mo, W , Mn, Co, Fe, Cu, Ag, Zn, B, Al, Ga, C, Si, Sn and Zr.

In some embodiments, the electrode density may be 3.5 g/cc or more.

In some embodiments, a second cathode active material layer may be further formed on the first cathode active material layer. The second cathode active material layer may include second lithium-transition metal composite oxide particles having an average particle diameter greater than that of the first lithium-transition metal composite oxide particles.

In some embodiments, a thickness of the second cathode active material layer may be greater than a thickness of the first cathode active material layer.

In some embodiments, the average particle diameter of the second lithium-transition metal composite oxide particles may be 2 $\mu$m or more.

A cathode for a lithium secondary battery includes a current collector, and a first cathode active material layer formed by being pressed on at least one surface of the current collector. The first cathode active material layer includes first lithium-transition metal composite oxide particles. A ratio of an average particle diameter of the first lithium-transition metal composite oxide particles relative to an initial thickness of the current collector expressed as PDCR (Particle size Divided by Current collector Ratio) in Equation 2 is in a range from 16.7% to 180.0%.

[Equation 2]

$$PDCR(\%) = (D50/T1)*100$$

In Equation 2, D50 is the average particle diameter ($\mu$m) of the first lithium-transition metal composite oxide particles, and T1 is the initial thickness ($\mu$m) of the current collector.

A lithium secondary battery includes the cathode for a lithium secondary battery according to embodiments as described above, and an anode facing the cathode.

A cathode according to embodiments of the present invention includes a current collector and a first cathode active material layer including a first lithium-transition metal composite oxide particle. A pressed ratio of the current collector is 25% or less, and an electrode density is 3.4 g/cc or more. Accordingly, deformation or breakage of the current collector may be reduced in a fabrication of the cathode having a high energy density, thereby improving a process productivity and improving life-span properties of the secondary battery.

Additionally, a ratio of an average particle diameter of the first lithium-transition metal composite oxide particles relative to an initial thickness of the current collector may be within a predetermined range. Thus, an excessively large pressed ratio of the current collector caused when the particle size is excessively large compared to a thickness of the current collector may be prevented. Further, a reduction of a capacity property from the cathode caused when the particle size is excessively small compared to the thickness of the current collector may also be prevented.

In some embodiments, a content of particles having a single particle shape included in the first lithium-transition metal composite oxide particles may be 10 wt% or more based on a total weight of the first lithium-transition metal composite oxide particles. Accordingly, sufficient capacity properties may be maintained while reducing the pressed ratio of the current collector.

For example, a second cathode active material layer comprising second lithium-transition metal composite oxide particles that have an average particle diameter greater than that of the first lithium-transition metal composite oxide particles may be further formed on the first cathode active material layer. Thus, a cathode having a sufficient electrode density may be obtained while reducing the pressed ratio of the current collector strain.

BRIEF DESCRIPTION OF THE DRAWINGS

FIG. 1 shows SEM images of cross-sections of cathodes according to exemplary example and comparative example.
FIGS. 2 and 3 are schematic top planar view and cross-sectional view, respectively, illustrating a lithium secondary battery in accordance with exemplary embodiments.
FIG. 4 shows SEM images of cross-sections of cathodes according to Example 1 and Comparative Example 1.

DETAILED DESCRIPTION OF THE EMBODIMENTS

According to embodiments of the present invention, a cathode for a lithium secondary battery including a cathode active material that includes lithium-transition metal composite oxide particles, and a lithium secondary battery including the same are provided.

Hereinafter, embodiments of the present invention will be described in detail with reference to experiment examples and drawings. However, the embodiments disclosed herein are exemplary and the present invention is not limited to a specific embodiment.

A cathode of the present invention includes a current collector and a first cathode active material layer. In the cathode, a pressed ratio of the current collector strain is in a predetermined range and an electrode density is 3.4 g/cc or more.

The current collector (e.g., a cathode current collector) may include, e.g., stainless steel, nickel, aluminum, titanium, copper, or an alloy thereof, preferably may include aluminum or an aluminum alloy.

In some embodiments, an initial thickness of the current collector may be in a range from 8 $\mu$m to 12 $\mu$m. In the above range, a content of the cathode active material in the cathode may be increased while maintaining durability of the current collector. Thus, capacity and power properties of a secondary battery may be improved while maintaining reliability and stability of a cathode fabrication.

The term "initial thickness of the current collector" used in the present application may refer to a thickness of the current collector before pressing (rolling).

The first cathode active material layer including first lithium-transition metal composite oxide particle is formed on at least one surface of the current collector.

For example, the first lithium-transition metal composite oxide particles may each include nickel (Ni), and may further include at least one of cobalt (Co) and manganese (Mn).

For example, the first lithium-transition metal composite oxide particle may include nickel and may be represented by Chemical Formula 1 below.

[Chemical Formula 1]     $Li_aNi_xM_{1-x}O_{2+y}$

In Chemical Formula 1, $0.9 \leq a \leq 1.5$, $0.6 \leq x \leq 0.99$, and $-0.1 \leq y \leq 0.1$. M may represent at least one element selected from Na, Mg, Ca, Y, Ti, Hf, V, Nb, Ta, Cr, Mo, W, Mn, Co, Fe, Cu, Ag, Zn, B, Al, Ga, C, Si, Sn or Zr.

In some preferable embodiments, a molar ratio or concentration of Ni (x) in Chemical Formula 1 may be 0.8 or more, and may preferably exceed 0.8.

Ni may serve as a metal related with capacity and power of the lithium secondary battery. Accordingly, as described above, the first lithium-transition metal composite oxide particle having the high-Ni composition may be employed so that the cathode and the lithium secondary battery having high power may be provided.

However, as the content of Ni increases, long-term storage and life-span stability of the cathode or the lithium secondary battery may be relatively degraded. In exemplary embodiments, Co may be introduced to maintain an electrical conductivity and Mn may be introduced to improve properties related to life-span stability and capacity retention.

For example, the first cathode active material layer may be formed by coating, drying and pressing a first cathode active material composition including the above-described first lithium-transition metal composite oxide particles on the current collector.

For example, the first lithium-transition metal composite oxide particles may be mixed and stirred with a binder, a conductive material and/or a dispersive agent in a solvent to prepare the first cathode active material composition.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous-based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as

LaSrCoO$_3$ or LaSrMnO$_3$, etc.

In some embodiments, the pressing may be performed by passing the first cathode active material composition coated and dried on at least one surface of the current collector through a roll press device and adjusting a hydraulic pressure. For example, the pressure applied to the first cathode active material composition during the pressing may be in a range from 5 tons to 10 tons based on a linear pressure of the roll (e.g., a load per unit length in a width direction of the roll). In the above linear pressure range, the electrode having a sufficient density may be obtained while preventing deformation of the current collector and cracks of the first lithium-transition metal composite oxide particles.

For example, an increase of the average particle diameter (D50) of the cathode active material, an increase of the rolling pressure and/or a reduction of the current collector thickness may be considered to fabricate the cathode having a high energy density. However, in this case, the deformation or fracture of the current collector according to the above-described pressing may be easily caused, thereby degrading productivity of the cathode may be reduced and durability/stability of the secondary battery.

In the cathode of the present invention, a pressed ratio as expressed as Equation 1 below is 25% or less.

$$[\text{Equation 1}]$$

$$S(\%) = \{(T1-T2)/T1\}*100$$

In Equation 1, S is the pressed ratio of the current collector strain (%), T1 is an initial thickness (μm) of the current collector, and T2 is a thickness (μm) of the current collector after the above-described pressing.

The thickness of the current collector after the pressing may refer to an average value of thicknesses of the current collector at 20 to 30 points when a cathode cross-section of a 200 μm-length region of the current collector in a longitudinal direction is photographed by an SEM after the pressing.

For example, the thickness of the current collector at the point of the current collector may refer to a length of the current collector measure in a vertical direction with respect to the longitudinal direction of the current collector based on a maximally pressed point (e.g., a rolled point) by a single cathode active material

For example, the thickness of the current collector may be measured at 24 points by the above measurement method, and an average value of the measured thicknesses of the current collector may be calculated to obtain the "thickness of the current collector after the pressing".

In an embodiment, the number of points may be 24.

In the range of the pressed ratio, for example, deformation or breakage of the current collector may be prevented to increase productivity of the cathode, and a tensile strength of the cathode may be maintained or improved. Accordingly, productivity, stability and durability of the secondary battery may be improved.

For example, the initial thickness T1 of the current collector may be substantially the same as a maximum thickness of the current collector after the pressing. Thus, the initial thickness of the current collector may be indirectly measured by measuring the maximum thickness of the current collector after the pressing.

In some embodiments, an average particle diameter (D50) of the first lithium-transition metal composite oxide particles may be in a range from 2 to 17 μm. In the above range, deformation of the current collector due to the pressing may be prevented while sufficiently maintaining an electrode density. Thus, stability and durability may be improved while maintaining the capacity and power properties of the secondary battery.

The term "average particle size" or "D50" as used herein may refer to a particle size when a volume accumulation percentage in a particle size distribution based on a particle volume corresponds to 50%.

In some embodiments, the first lithium-transition metal composite oxide particles may include a first particle having a single particle shape and a second particle having a secondary particle shape in which the primary particles are aggregated.

As used herein, the term "single particle shape" is used to, e.g., exclude a secondary particle formed by aggregation of a plurality of primary particles. For example, in the first particle having a single particle shape included in the first lithium-transition metal composite oxide particles, the secondary particle structure including primary particles (e.g., more than 10, 20 or more, 30 or more, 40 or more, 50 or more, etc.) granulated or aggregated therein may be excluded.

The term "single particle shape" used herein are not intended to exclude, e.g., a monolithic structure in which 2 to 10 single particles are attached to or in close contact with each other.

In some embodiments, the first lithium-transition metal composite oxide particle may include a structure in which a plurality of primary particles are integrally merged together and are substantially converted into a single particle.

For example, the first particle may have a granular or spherical single particle shape.

For example, an average particle diameter of the first particles may be smaller than an average particle diameter of the second particles. In this case, the pressed ratio of the current collector and a ratio of the average particle diameter of the first lithium-transition metal composite oxide particles relative to the initial thickness of the current collector may be reduced. Accordingly, deformation and breakage of the current collector during the pressing may be reduced, thereby improving productivity and process reliability of the cathode.

In some embodiments, a content of the first particles may be 10 wt% or more, preferably in a range from 10 wt% to 95 wt%, more preferably in a range from 30 wt% to 80 wt%, based on the total weight of the first lithium-transition metal composite oxide particles. In the above range, a BET specific surface area of the first lithium-transition metal composite oxide particles may be appropriately maintained while reducing the pressed ratio of the current collector. Thus, the power and capacity properties may be maintained or improved while enhancing the life-span properties and productivity of the secondary battery.

In some embodiments, the ratio of the average particle size of the first lithium-transition metal composite oxide particles relative to the initial thickness of the current collector expressed by Equation 2 below (Particle size Divided by Current collector Ratio, PDCR) may be in a range from 16.7 % to 180.0 %.

$$[Equation\ 2]$$

$$PDCR(\%) = (D50/T1)*100$$

In Equation 2, D50 is an average particle diameter ($\mu$m) of the first lithium-transition metal composite oxide particles, and T1 is the initial thickness ($\mu$m) of the current collector.

The PDCR may represent, e.g., a magnitude of the average particle diameter of the first lithium-transition metal composite oxide particles compared to the thickness of the current collector.

In the PDCR value range, the average particle diameter of the first lithium-transition metal composite oxide particles relative to the initial thickness of the current collector may be appropriately maintained. Accordingly, an excessive increase of the pressed ratio of the current collector caused when the particle size is excessively large compared to the thickness of the current collector may be prevented, and deterioration of the capacity properties of the cathode caused when the particle size is excessively small compared to the thickness of the current collector may also be prevented.

For example, in the PDCR value range, an electrode breakage in the pressing process caused when the average particle diameter of the first lithium-transition metal composite oxide particles is excessively increased compared to the thickness of the current collector may be prevented. Further, filter clogging in the fabrication of the cathode or reduction of the energy density of the secondary battery caused when the average particle diameter of the first lithium-transition metal composite oxide particles is excessively small compared to the thickness of the current collector may be prevented.

For example, the above-described PDCR value may be adjusted within the above-described range, so that the average particle diameter of the first lithium-transition metal composite oxide particles and the thickness of the current collector may be adjusted to appropriate values in consideration of the pressed ratio of the current collector and the capacity of the battery. Accordingly, productivity of the cathode may be improved while implementing high capacity properties.

For example, in a cathode having a low electrode density, deformation and breakage of the current collector may not easily occur regardless of the average particle diameter of the first lithium-transition metal composite oxide particles or the thickness of the current collector. For example, the cathode having the low electrode density may have a low rolling pressure, so that deformation of the current collector or the particle breakage may be prevented. However, the cathode having the low electrode density may have degraded capacity and power properties. Thus, the reduction of the pressed ratio to 25% or less may be significant when the electrode density of the cathode becomes high.

The electrode density of the cathode of the present invention is 3.4 g/cc or more. In the above range, the capacity and power properties of the secondary battery may be maintained or enhanced while satisfying the above-described pressed ratio of the current collector strain and/or the PDCR ranges to improve the productivity of the cathode.

In some embodiments, the electrode density may be 3.5 g/cc or more. Accordingly, a cathode of high energy density may be implemented.

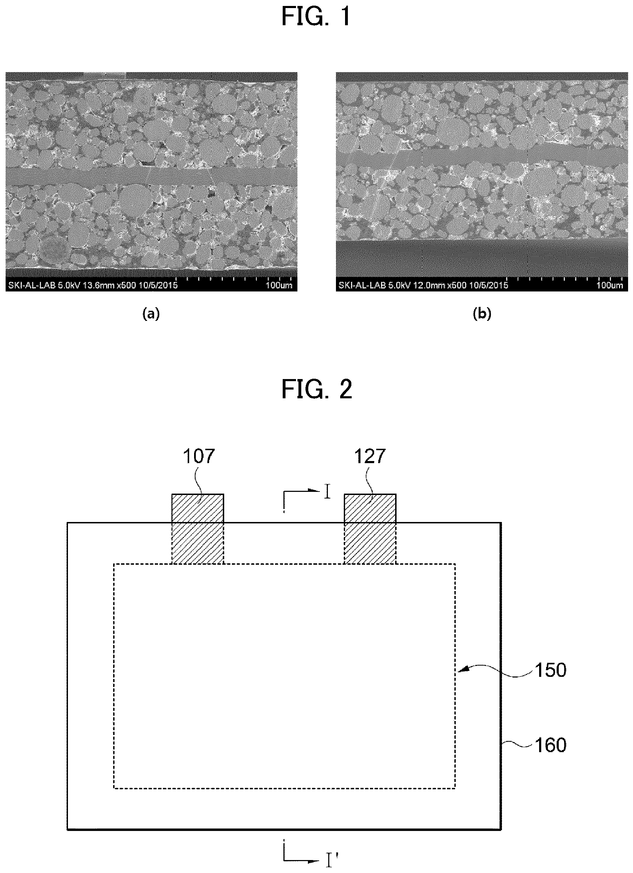

FIG. 1 shows SEM images of cross-sections of cathodes according to exemplary example and comparative example. In part (a) of FIG. 1, an SEM image showing a cross-section of a cathode having an electrode density of 3.0 g/cc is provided. In part (b) of FIG. 1, an SEM image showing a cross-section of a cathode having an electrode density of 3.4 g/cc is provided.

Referring to FIG. 1, a low-density electrode having an electrode density of less than 3.4 g/cc (e.g., (a) of FIG. 1) has lower capacity, but a deformation of a current is relatively small. A high-density electrode having an electrode density of 3.4 g/cc or more (e.g., (b) of FIG. 1) has an improved energy density, but a deformation of the current collector may become greater. Accordingly, in the cathode having an electrode density of 3.4 g/cc or more, the control of the pressed ratio of the current collector may be required.

In some embodiments, a second cathode active material layer may be formed on the above-described first cathode active material layer. For example, the second cathode active material layer may include second lithium-transition metal composite oxide particles having an average particle diameter greater than the average particle diameter of the first lithium-transition metal composite oxide particles.

Thus, the first lithium-transition metal composite oxide particles having a relatively small average particle diameter may face the current collector. The second lithium-transition metal composite oxide particles having a relatively large average particle diameter may be spaced apart from the current collector with the first lithium-transition metal composite oxide particles interposed therebetween. Accordingly, a cathode having sufficient electrode density may be implemented while reducing the deformation of the current collector.

In some embodiments, the average particle diameter of the second lithium-transition metal composite oxide particles may be 2 $\mu$m or more, preferably in a range from 10 $\mu$m to 20 $\mu$m. In the above range, the electrode density may be sufficiently increased while preventing an excessive increase of the thickness of the electrode. Thus, the thickness of the battery may become relatively thin while implementing a high energy density electrode.

The second lithium-transition metal composite oxide particles may have substantially the same composition as that of the first lithium-transition metal composite oxide particles. For example, the second lithium-transition metal composite oxide particle may be represented by the above-described Chemical Formula 1.

For example, the second lithium-transition metal composite oxide particles may have a secondary particle structure in which primary particles are aggregated.

For example, the second cathode active material layer may be formed by coating, drying, and then pressing a second cathode active material composition including the second lithium-transition metal composite oxide particles as described above on the current collector.

For example, the second cathode active material composition may be prepared by mixing and stirring the second lithium-transition metal composite oxide particles with a binder, a conductive material and/or a dispersive agent in a solvent. The solvent, the binder and the conductive material may include materials substantially the same as those for preparing the first cathode active material composition.

In some embodiments, a thickness of the second cathode active material layer may be greater than that of the first cathode active material layer. In this case, deformation and breakage of the current collector may be prevented while implementing the high energy density electrode. Accordingly, reliability and productivity of the cathode may be improved.

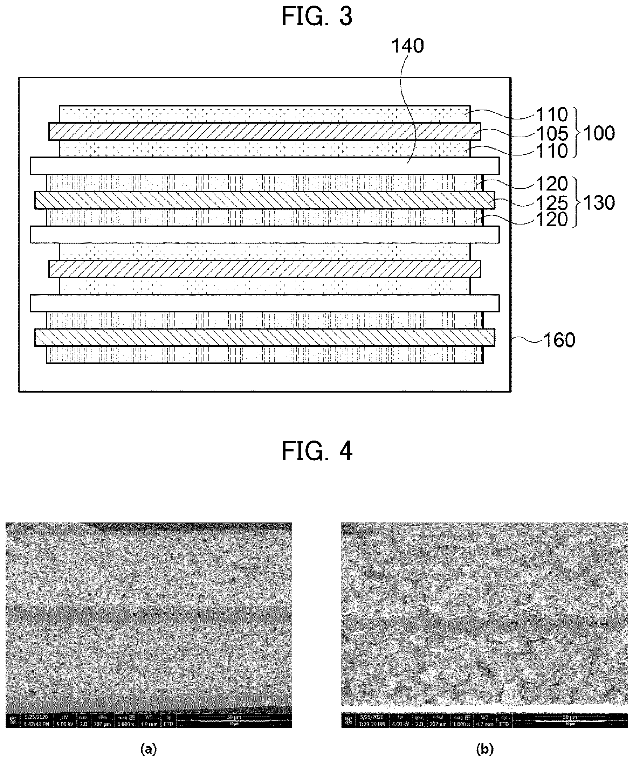

FIGS. 2 and 3 are schematic top planar view and cross-sectional view, respectively, illustrating a lithium secondary battery in accordance with exemplary embodiments.

Hereinafter, a lithium secondary battery including the cathode for a lithium secondary battery as described above is provided with reference to FIGS. 2 and 3.

Referring to FIGS. 2 and 3, the lithium secondary battery may include a cathode 100 and an anode 130, and may further include a separation layer 140.

As described above, the cathode 100 may include a cathode active material layer 110 formed by coating the cathode active material including the first lithium-transition metal composite oxide particles on a cathode current collector 105.

The cathode active material layer 110 may include, e.g., the above-described first cathode active material layer. In some embodiments, the cathode active material layer 110 may further include the second cathode active material layer formed on the first cathode active material layer.

The anode 130 may include an anode current collector 125 and an anode active material layer 120 formed by coating an anode active material on the anode current collector 125.

The anode active material may include any widely known material capable of adsorbing and desorbing lithium ions without any particular limitation. For example, a carbon-based material such as a crystalline carbon, an amorphous carbon, a carbon composite material, a carbon fiber; a lithium alloy; a silicon (Si)-based compound or tin may be used.

The amorphous carbon may include a hard carbon, cokes, a mesocarbon microbead (MCMB) fired at a temperature of 1,500°C or less, a mesophase pitch-based carbon fiber (MPCF), etc. The crystalline carbon may include a graphite-based material such as natural graphite, graphitized cokes, graphitized MCMB, graphitized MPCF, etc. The lithium alloy may further include an element such as aluminum, zinc, bismuth, cadmium, antimony, silicon, lead, tin, gallium, indium, etc.

The anode current collector 125 may include, e.g., gold, stainless steel, nickel, aluminum, titanium, copper or an alloy thereof, preferably copper or a copper alloy.

For example, an anode composition may be prepared by mixing and stirring the anode active material with a binder, a conductive material and/or a dispersive agent in a solvent. The anode composition may be coated on the anode current collector 125, and then dried and pressed to form the anode 130.

The binder and the conductive agent substantially the same as or similar to those as mentioned-above. In some embodiments, the binder for forming the anode may include, e.g., an aqueous binder such as styrene-butadiene rubber (SBR) for compatibility with the carbon-based active material, and may be used together with a thickener such as carboxymethyl cellulose (CMC).

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated together with an electrolyte in an outer case 160 to define a lithium secondary battery. In exemplary embodiments, a non-aqueous electrolyte may be used as the electrolyte.

For example, the non-aqueous electrolyte solution may include a lithium salt and an organic solvent. The lithium salt may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gammabutyrolactone, propylene sulfite, tetrahydrofuran, etc. These may be used alone or in a combination thereof.

As illustrated in FIG. 2, electrode tabs (a cathode tab and an anode tab) may protrude from the cathode current collector 105 and the anode electrode current collector 125 included in each electrode cell to one side of the case 160. The electrode tabs may be welded together with the one side of the case 160 to be connected to an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

Fabrication of cathode

$NiSO_4$, $CoSO_4$ and $MnSO_4$ were mixed in a molar ratio of 0.83:0.11:0.06 using distilled water from which dissolved oxygen was removed by bubbling with $N_2$ for 24 hours. The solution was put into a reactor at 50 °C, and NaOH and $NH_4OH$ were used as a precipitating agent and a chelating agent, respectively, to proceed with a coprecipitation reaction for 48 hours to obtain $Ni_{0.83}Co_{0.11}Mn_{0.06}(OH)_2$ as a transition metal precursor. The obtained precursor was dried at 80 °C for 12 hours and then re-dried at 110 °C for 12 hours.

Lithium hydroxide and the transition metal precursor were added in a molar ratio of 1.05:1 in a dry high-speed mixer and uniformly mixed for 5 minutes. The mixture was placed in a kiln and heated in a range from 700 °C to 1,000°C at a heating rate of 2°C/min, and maintained in a range from 700 °C to 1,000 °C for 10 hours. Oxygen was passed continuously at a flow rate of 10 mL/min during the heating and maintenance. After the calcination, natural cooling was performed to room temperature, followed by pulverization and classification to obtain particles in a single particle shape having a composition of $LiNi_{0.83}Co_{0.11}Mn_{0.06}O_2$.

A cathode was manufactured only using the obtained single particle-shaped particles as a cathode active material.

Specifically, a cathode mixture was prepared by mixing the cathode active material, Denka Black as a conductive material and PVDF as a binder in a mass ratio of 95.5:3:1.5, respectively. After coating the cathode mixture on an aluminum current collector having an initial thickness of 12.0 $\mu$m, drying and pressing were performed to prepare a cathode having a first cathode active material layer formed on the current collector. The pressing was performed by passing the current collector and the cathode mixture through a roll press.

A thickness of the current collector after the pressing measured by the method described below was 11.21 $\mu$m.

A target electrode density of the cathode after the pressing was adjusted to 3.7 g/cc, and a thickness of a cross-section of the cathode was formed to be within 53 μm to 57 μm. An average particle diameter (D50) of the first lithium-transition metal composite oxide particles was measured as 7 μm.

Fabrication of lithium secondary battery

An anode slurry containing 93 wt% of natural graphite as an anode active material, 5 wt% of KS6 as a flake type conductive material, 1 wt% of styrene-butadiene rubber (SBR) as a binder and 1 wt% of carboxymethyl cellulose (CMC) as a thickener was prepared. The anode slurry was coated on a copper substrate, dried and pressed to prepare an anode.

The cathode and the anode prepared as described above were each notched by a predetermined size, and stacked with a separator (polyethylene, thickness: 25 μm) interposed therebetween to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M LiPF$_6$ solution in a mixed solvent of ethylene carbonate (EC)/ethyl methyl carbonate (EMC)/diethylene carbonate (DEC) (25/45/30; volume ratio), and then adding 1 wt% of vinylene carbonate, 0.5 wt% of 1,3-propensultone (PRS) and 0.5 wt% of lithium bis(oxalato)borate (LiBOB).

Example 2

In the above-described cathode active material formation, Ni$_{0.80}$Co$_{0.10}$Mn$_{0.10}$(OH)$_2$ precursor was used, and the calcination temperature was adjusted in a range from 700 °C to 800 °C to further obtain particles having a secondary particle shape.

First lithium-transition metal composite oxide particles were obtained by mixing the above-mentioned single particle shaped particles and the obtained secondary particle shaped particles in a weight ratio of 2:8.

A cathode and a lithium secondary battery were obtained by the same method as that in Example 1, except that the first lithium-transition metal composite oxide particles were used as a cathode active material.

A thickness of the current collector after the pressing was 10.92 μm.

Example 3

A cathode and a lithium secondary battery were obtained by the same method as that in Example 1, except that the calcination temperature was controlled and classified so that an average particle diameter (D50) of the first lithium-transition metal composite oxide particles was 1.8 μm.

A thickness of the current collector after the pressing was 11.1 μm.

Example 4

A cathode and a lithium secondary battery were obtained by the same method as that in Example 1, except that the first lithium-transition metal composite oxide particles were classified so as to have an average particle diameter (D50) of 18.5 μm, and an aluminum current collector having an initial thickness of 10 μm was used.

A thickness of the current collector after the pressing was 8.15 μm.

Example 5

A cathode and a lithium secondary battery were obtained by the same method as that in Example 2, except that the first lithium-transition metal composite oxide particles were obtained by mixing the particles in the single particle shape and particles in the secondary particle shape in a weight ratio of 10:90.

A thickness of the current collector after the pressing was 10.0 μm.

Example 6

A cathode and a lithium secondary battery were obtained by the same method as that in Example 2, except that the first lithium-transition metal composite oxide particles were obtained by mixing the particles in the single particle shape and particles in the secondary particle shape in a weight ratio of 8:92.

A thickness of the current collector after the pressing was 10.3 μm.

Example 7

Second lithium-transition metal composite oxide particles having the secondary particle shape and being classified to have an average particle diameter of 20 μm were obtained.

A cathode and a lithium secondary battery were obtained by the same method as in Example 1, except that a second cathode active material layer was formed on the first cathode active material layer using the obtained second lithium-transition metal composite oxide particles as a cathode active material.

Specific mixing, coating, drying and pressing were performed by the same method for forming the first cathode active material layer.

Comparative Example 1

A cathode and a lithium secondary battery were obtained by the same method as that in Example 2, except that the particles in the secondary particle shape obtained as the first lithium-transition metal composite oxide particles were used alone.

A thickness of the current collector after the pressing was 8.83 μm.

Comparative Example 2

A cathode and a lithium secondary battery were obtained by the same method as that in Example 1, except that a target electrode density of the cathode was adjusted to 3.3 g/cc.

A thickness of the current collector after the pressing was 11.2 μm.

Comparative Example 3

A cathode and a lithium secondary battery were obtained by the same method as that in Example 1, except that a linear pressure during the pressing was 11 tons.

A thickness of the current collector after the pressing was 9.24 μm.

Experimental Example 1

(1) Measurement of pressed ratio of current collector

Pressed ratios of the current collector in the cathodes according to the above-described Examples and Comparative Examples were calculated by substituting the initial thickness of the current collector and the thickness of the current collector after the pressing into Equation 1.

The thickness of the current collector after the pressing was measured using an SEM cross-section image obtained by cutting the cathode after the pressing.

(2) Measurement of PDCR (Particle size Divided by Current collector Ratio)

PDCR was calculated by substituting the average particle diameter (D50) of the first lithium-transition metal composite oxide particles and the initial thickness of the cathode current collector in Equation 2 prepared according to the above-described Examples and Comparative Examples.

The measurement results are shown in Table 1 below.

[Table 1]

| No. | electrode density (g/cc) | pressed ratio of current collector (%) | PDCR (%) | content of single particle (wt%) | formation of second cathode active material layer |
|---|---|---|---|---|---|
| Example 1 | 3.7 | 6.6 | 66.7 | 100 | X |
| Example 2 | 3.7 | 9.0 | 66.7 | 20 | X |
| Example 3 | 3.5 | 7.5 | 15 | 20 | X |
| Example 4 | 3.5 | 18.5 | 185 | 20 | X |
| Example 5 | 3.5 | 16.7 | 79.2 | 10 | X |

(continued)

| No. | electrode density (g/cc) | pressed ratio of current collector (%) | PDCR (%) | content of single particle (wt%) | formation of second cathode active material layer |
|---|---|---|---|---|---|
| Example 6 | 3.5 | 14.1 | 66.7 | 8 | X |
| Example 7 | 3.5 | 9.2 | 66.7 | 20 | O |
| Comparative Example 1 | 3.7 | 26.4 | 66.7 | 0 | X |
| Comparative Example 2 | 3.3 | 6.7 | 66.7 | 20 | X |
| Comparative Example 3 | 3.7 | 23.0 | 66.7 | 20 | X |

The formation of second cathode active material layer is represented as below.

X: the second cathode active material layer being not formed

O: the second cathode active material layer being formed

FIG. 4 shows SEM images of cross-sections of cathodes according to Example 1 and Comparative Example 1. The image (a) of FIG. 4 is an SEM image showing the cross-section of the cathode according to Example 1, and the image (b) of FIG. 4 is an SEM image showing the cross-section of the cathode according to Comparative Example

Referring to FIG. 4, in Example 1 where the single particles were used as the cathode active material, deformation of the current collector deformation was suppressed compared to the current collector of Comparative Example 1 where the secondary particles were used as the cathode active material.

Experimental Example 2

(1) Evaluation on capacity of formation charging/discharging and formation capacity efficiency

The lithium secondary battery prepared according to the above-described Examples and Comparative Examples were charged (CC-CV 1/3C 4.2V 0.05C CUT-OFF) in a chamber at 25 °C, and a battery capacity (formation charge capacity) was measured. Subsequently, the batteries were discharged again (CC 1/3C 2.5V CUT-OFF), and a battery capacity (formation discharge capacity) was measured.

A formation capacity efficiency was evaluated by converting the measured formation discharge capacity as a percentage (%) to the measured formation charge capacity into a percentage.

(2) Measurement of capacity retention (life-span property) during repeated charging and discharging

The lithium secondary batteries according to Examples and Comparative Examples were repeatedly charged (CC/CV 1.0C 4.2V 0.05C CUT-OFF) and discharged (CC 1.0C 2.5V CUT-OFF) 500 times in a 45 °C chamber. A life-span retention was evaluated as a percentage of a discharge capacity at the 500th cycle relative to a discharge capacity at the 1st cycle.

(3) Evaluation on electrode breakage

After the pressing of the cathode active material according to Examples and Comparative Examples was performed, the number of fractures per an electrode length was measured.

(4) Evaluation of filter clogging

When the cathode mixture was prepared according to Examples and Comparative Examples, filter clogging was visually detected per one batch.

The evaluation results are shown in Table 2 below.

[Table 2]

| No. | electrode breakage (no./km) | filter clogging (no./ batch) | formation charge capacity (Ah) | formation discharge capacity (Ah) | formation capacity efficiency (%) | capacity retention (%) |
|---|---|---|---|---|---|---|
| Example 1 | 0.1 | 0.13 | 20.8 | 18.84 | 90.6 | 93.2 |
| Example 2 | 0.1 | 0.13 | 21.5 | 19.99 | 93.0 | 92.0 |
| Example 3 | 0.1 | 1.21 | 19.6 | 17.39 | 88.7 | 92.3 |
| Example 4 | 1.5 | 0.08 | 20.7 | 19.02 | 91.9 | 89.6 |
| Example 5 | 0.1 | 0.13 | 20.8 | 19.01 | 91.4 | 91.1 |
| Example 6 | 0.1 | 0.13 | 20.6 | 18.77 | 91.1 | 90.1 |
| Example 7 | 0.1 | 0.13 | 21.3 | 19.77 | 92.8 | 91.8 |
| Comparative Example 1 | 1.1 | 0.13 | 22.1 | 20.49 | 92.7 | 78.3 |
| Comparative Example 2 | 0.1 | 0.13 | 18.9 | 15.88 | 84.0 | 91.5 |
| Comparative Example 3 | 0.1 | 0.13 | 20.2 | 18.20 | 90.1 | 85.4 |

Referring to Table 2, in Examples having electrode densities of 3.4 g/cc or more and pressed ratios of the current collector strain of 25% or less, improved capacity retentions during the cycle repetition were provided while maintaining overall capacity properties when compared to those from Comparative Examples.

In Example 3 where the PDCR was less than 16.7%, the average particle diameter of the first lithium-transition metal composite oxide particles was excessively small relatively to the thickness of the current collector, and the capacity properties were relatively lowered compared to those from other Examples. Further, the filter clogging occurred during the cathode fabrication.

In Example 4 where the PDCR exceeded 180%, the average particle diameter of the first lithium-transition metal composite oxide particles was excessively large compared to the thickness of the current collector, and the capacity retention was relatively lower than those of other Examples. Further, the electrode breakage was increased during the pressing.

In Example 5, the single particle content was less than 10 wt% based on the total weight of the first lithium-transition metal composite oxide particles. The average particle size was increased, and the pressed ratio of the current collector strain was increased. Accordingly, the life-span propertied were relatively degraded compared to those from other Examples.

In Comparative Example 1 where the secondary particles were used alone as the cathode active material, the deformation of the current collector was increased and the capacity retention was explicitly lowered.

In Comparative Example 2 having an electrode density less than 3.4 g/cc, the pressed ratio of the current collector strain was low and the life-span property was not lowered. However, the capacity properties were remarkably deteriorated due to the low electrode density.

In Comparative Example 3 where the pressed ratio of the current collector exceeded 25%, the current collector was excessively deformed during the pressing. As a result, durability of the cathode was deteriorated, thereby reducing the life-span properties.

**Claims**

1.   A cathode for a lithium secondary battery, comprising:

a current collector; and
a first cathode active material layer formed by being pressed on at least one surface of the current collector, the first cathode active material layer comprising first lithium-transition metal composite oxide particles, wherein a pressed ratio of the current collector represented by Equation 1 is 25 % or less, and an electrode density is 3.4 g/cc or more:

[Equation 1]

$$S(\%) = \{(T1-T2)/T1\}*100$$

wherein, in Equation 1, S is the pressed ratio of the current collector (%), T1 is an initial thickness ($\mu$m) of the current collector, and T2 is a thickness ($\mu$m) of the current collector after a pressing.

2.  The cathode for a lithium secondary battery of claim 1, wherein a pressure of the pressing is in a range from 5 tons to 10 tons based on a linear pressure.

3.  The cathode for a lithium secondary battery of claim 1 or claim 2, wherein the thickness of the current collector after the pressing is defined as an average value of thicknesses measured at 20 to 30 points when a cathode cross-section of a 200 $\mu$m-length region in a longitudinal direction of the current collector is photographed by a scanning electron microscope (SEM) after the pressing.

4.  The cathode for a lithium secondary battery of any one of claims 1 to 3, wherein an average particle diameter (D50) of the first lithium-transition metal composite oxide particles is in a range from 2 $\mu$m to 17 $\mu$m.

5.  The cathode for a lithium secondary battery of any one of claims 1 to 4, wherein the current collector has an initial thickness in a range from 8 $\mu$m to 12 $\mu$m.

6.  The cathode for a lithium secondary battery of any one of claims 1 to 5, wherein the first lithium-transition metal composite oxide particles comprise first particles having a single particle shape and second particles having a secondary particle shape, and
    a content of the first particles is 10 wt% or more based on a total weight of the first lithium-transition metal composite oxide particles.

7.  The cathode for a lithium secondary battery of claim 6, wherein the first particles comprise particles of a monolithic form in which 2 to 10 single particles are attached or adhered to each other.

8.  The cathode for a lithium secondary battery of any one of claims 1 to 7, wherein the first lithium-transition metal composite oxide particles contain nickel and is represented by Chemical Formula 1:

    [Chemical Formula 1]          $Li_aNi_xM_{1-x}C_{2+y}$

    wherein, in Chemical Formula 1, $0.9 \leq a \leq 1.5$, $0.6 < x < 0.99$, $-0.1 \leq y \leq 0.1$, M includes at least one element selected from Na, Mg, Ca, Y, Ti, Hf, V, Nb, Ta, Cr, Mo, W , Mn, Co, Fe, Cu, Ag, Zn, B, Al, Ga, C, Si, Sn and Zr.

9.  The cathode for a lithium secondary battery of any one of claims 1 to 8, wherein the electrode density is 3.5 g/cc or more.

10. The cathode for a lithium secondary battery of any one of claims 1 to 9, further comprising a second cathode active material layer formed on the first cathode active material layer,
    wherein the second cathode active material layer comprises second lithium-transition metal composite oxide particles having an average particle diameter greater than that of the first lithium-transition metal composite oxide particles.

11. The cathode for a lithium secondary battery of claim 10, wherein a thickness of the second cathode active material layer is greater than a thickness of the first cathode active material layer.

12. The cathode for a lithium secondary battery of claim 10 or claim 11, wherein the average particle diameter of the second lithium-transition metal composite oxide particles is 2 $\mu$m or more.

13. A cathode for a lithium secondary battery, comprising:

    a current collector; and

a first cathode active material layer formed by being pressed on at least one surface of the current collector, the first cathode active material layer comprising first lithium-transition metal composite oxide particles, wherein a ratio of an average particle diameter of the first lithium-transition metal composite oxide particles relative to an initial thickness of the current collector expressed as PDCR (Particle size Divided by Current collector Ratio) in Equation 2 is in a range from 16.7 % to 180.0 %:

[Equation 2]

$$PDCR(\%) = (D50/T1)*100$$

wherein, in Equation 2, D50 is the average particle diameter ($\mu$m) of the first lithium-transition metal composite oxide particles, and T1 is the initial thickness ($\mu$m) of the current collector.

14. A lithium secondary battery, comprising:

the cathode for a lithium secondary battery of any one of claims 1 to 13; and
an anode facing the cathode.

# FIG. 1

(a)

(b)

# FIG. 2

# FIG. 3

# FIG. 4

(a)

(b)

Europäisches
Patentamt

European
Patent Office

Office européen
des brevets

# EUROPEAN SEARCH REPORT

Application Number

EP 22 20 9300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 849 008 A1 (LG CHEMICAL LTD [KR]) 14 July 2021 (2021-07-14) * abstract * * paragraph [0038] * * example 1 * * table 1 * * figures 1, 3, 4 * | 1-14 | INV. H01M4/04 H01M4/36 H01M10/0525 |
| T | HEENAN T.M.M. ET AL: "Theoretical transmissions for X-ray computed tomography studies of lithium-ion battery cathodes", MATERIALS & DESIGN, vol. 191, 19 April 2020 (2020-04-19), page 108585, XP093039824, AMSTERDAM, NL ISSN: 0264-1275, DOI: 10.1016/j.matdes.2020.108585 * table 1 * | | |
| X | US 2018/323423 A1 (KIM JI HYE [KR] ET AL) 8 November 2018 (2018-11-08) | 13,14 | TECHNICAL FIELDS SEARCHED (IPC) |
| A | * abstract * * example 1 * | 1-12 | H01M |
| A | US 2006/257745 A1 (CHOI YOUNG-MIN [KR] ET AL) 16 November 2006 (2006-11-16) * abstract * | 1-14 | |

The present search report has been drawn up for all claims

| Place of search | Date of completion of the search | Examiner |
|---|---|---|
| The Hague | 18 April 2023 | Rosciano, Fabio |

EPO FORM 1503 03.82 (P04C01)

**EP 4 187 630 A1**

## ANNEX TO THE EUROPEAN SEARCH REPORT
## ON EUROPEAN PATENT APPLICATION NO.

EP 22 20 9300

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2023

| Patent document cited in search report | | Publication date | Patent family member(s) | | Publication date |
|---|---|---|---|---|---|
| EP 3849008 | A1 | 14-07-2021 | CN | 113133331 A | 16-07-2021 |
| | | | EP | 3849008 A1 | 14-07-2021 |
| | | | JP | 7123251 B2 | 22-08-2022 |
| | | | JP | 2022516395 A | 28-02-2022 |
| | | | KR | 20210058415 A | 24-05-2021 |
| | | | US | 2022310984 A1 | 29-09-2022 |
| | | | WO | 2021096025 A1 | 20-05-2021 |
| US 2018323423 | A1 | 08-11-2018 | KR | 20180122238 A | 12-11-2018 |
| | | | US | 2018323423 A1 | 08-11-2018 |
| US 2006257745 | A1 | 16-11-2006 | CN | 1822414 A | 23-08-2006 |
| | | | CN | 102163717 A | 24-08-2011 |
| | | | JP | 5213305 B2 | 19-06-2013 |
| | | | JP | 2006228733 A | 31-08-2006 |
| | | | KR | 20060091486 A | 21-08-2006 |
| | | | US | 2006257745 A1 | 16-11-2006 |
| | | | US | 2010019208 A1 | 28-01-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170093085